# FASCICULE DE BREVET EUROPEEN

(11) **EP 3 254 443 B1**
(45) Date de publication et mention de la délivrance du brevet: **22.04.2020**
(21) Numéro de dépôt: 16705253.9
(22) Date de dépôt: 03.02.2016
(51) Int. Cl.: H04W 4/02, H04W 4/70, H04W 4/80, H04W 12/00, H04L 29/08, A45D 34/00, A45D 33/32, F21V 33/00

(54) **SYSTÈME ET PROCÉDÉ DE COMMUNICATION METTANT EN OEUVRE UN RÉCIPIENT POUR UN PRODUIT COSMÉTIQUE OU PHARMACEUTIQUE OU UN VIN OU UN SPIRITUEUX ET DEUX ÉQUIPEMENTS MOBILES DE TÉLÉCOMMUNICATION**
KOMMUNIKATIONSSYSTEM UND KOMMUNIKATIONSVERFAHREN MIT DEM EINSATZ VON EINEM BEHÄLTER FUR SCHÖNHEITSMITTEL, MEDIKAMENT, WEIN, ODER ALKOHOLISCHES GETRÄNK ZUSAMMEN MIT ZWEI MOBILEN KOMMUNIKATIONSENDGERÄTEN
COMMUNICATION SYSTEM AND METHOD INVOLVING A CONTAINER FOR A COSMETIC OR PHARMACEUTICAL PRODUCT, A WINE, OR AN ALCOHOLIC LIQUID AS WELL AS TWO MOBILE COMMUNICATION DEVICES

(30) Priorité: 03.02.2015 FR 1550841
(43) Date de publication de la demande: 13.12.2017
(73) Titulaire: QUALIPAC, 92110 Clichy (FR)
(72) Inventeur: MARTINES, Gérald, 75018 Paris (FR)
(74) Mandataire: Derambure Conseil
(86) Numéro de dépôt international: PCT/FR2016/050226
(87) Numéro de publication internationale: WO 2016/124857

(56) Documents cités:
- EP-A1- 2 571 233
- EP-A2- 1 546 819
- WO-A1-2014/016718
- WO-A2-2014/130946
- FR-A1- 2 962 306
- US-A1- 2006 218 014
- US-A1- 2009 291 422
- US-A1- 2010 167 704
- US-A1- 2014 045 147

## Description

L'invention concerne le domaine des objets communicants destinés à promouvoir un environnement intelligent.

L'invention concerne plus particulièrement un système de communication comprenant un récipient pour un produit cosmétique ou pharmaceutique ou un vin ou un spiritueux et au moins deux équipements mobiles de télécommunication. L'invention concerne également un procédé de communication associé.

Il existe des objets communicants, tels que des récipients de parfum ou de produits cosmétiques, capables de produire une séquence lumineuse d'ambiance et agencés pour recevoir des commandes permettant de faire varier au cours du temps la séquence lumineuse produite. L'objet communicant fonctionne alors exclusivement comme esclave du système de communication.

Par ailleurs, il existe des articles associés, chacun ou par lot, à une puce RFID lisible par un équipement mobile de télécommunication pour obtenir des informations sur l'article ou le lot d'articles dont la puce est lue. Par exemple, une traçabilité d'un article ou d'un lot d'articles dans son circuit de distribution peut avantageusement être obtenue. Toutefois, la communication ainsi réalisée entre l'article et l'équipement mobile de télécommunication est exclusivement unidirectionnelle de l'article ou du lot d'articles vers l'équipement mobile de télécommunication.

L'art antérieur le plus proche est représenté par la demande internationale WO2014/130946 qui divulgue l'émission d'alertes sensorielles par des objets connectés, tels des accessoires de mode comme une bague, reliés par radio à courte portée au portable d'un utilisateur, et permettant son avertissement discret lors de la réception d'un message (SMS ou email) ou d'un appel téléphonique, y compris s'il n'a pas son portable sur lui. Ladite demande détaille de nombreuses extensions de ce procédé, prenant en compte une grande variété de paramètres contextuels, dont la localisation des équipements impliqués par l'envoi et la réception desdits messages/ appels; elle ne permet cependant pas l'émission d'une alerte si le deuxième utilisateur rend visite à l'improviste au premier, sans lui envoyer de message ni l'appeler.

On connaît par ailleurs les documents WO204/016718, US2009/291422, FR2962306, US2006/218014, EP1546819, US2010/167704 et EP2571233. Dans ce contexte, la présente invention propose un système et un procédé de communication faisant intervenir un objet communicant et permettant d'atteindre une plus grande interactivité entre leurs utilisateurs.

A cette fin, le système de l'invention, comprenant un récipient pour un produit cosmétique ou pharmaceutique ou un vin ou un spiritueux et au moins deux équipements mobiles de télécommunication, est essentiellement tel que :
le récipient comprend une pluralité de composants électroniques fonctionnellement reliés entre eux dont :
   - au moins une source de sollicitation sensorielle agencée pour émettre un signal sensoriel vers l'extérieur du récipient,
   - des moyens de communication bidirectionnelle à courte distance par ondes radio, et
   - des moyens de contrôle de ladite au moins une source de sollicitation sensorielle, et tel que
un premier desdits au moins deux équipements mobiles de télécommunication comprend des moyens de communication bidirectionnelle à courte distance par ondes radio,
de sorte que le récipient et un deuxième desdits au moins deux équipements mobiles de télécommunication soient aptes à communiquer entre eux par l'intermédiaire du premier équipement mobile de télécommunication, lorsque le premier équipement mobile de télécommunication est situé dans une zone de couverture des moyens de communication bidirectionnelle du récipient,
les moyens de contrôle du récipient contrôlant ladite au moins une source de sollicitation sensorielle pour générer une séquence de signaux sensoriels déterminée au moins en fonction de données communiquées au récipient par le deuxième desdits au moins deux équipements mobiles de télécommunication.

Le récipient est ainsi intégré dans le système de communication de sorte à s'adapter au moins à la présence du premier équipement mobile de télécommunication dans sa zone de couverture. Le récipient est donc avantageusement un acteur du système de communication. Le récipient promeut l'environnement intelligent défini par le système de communication.

Selon une particularité, le récipient étant associé à un identifiant et l'un au moins desdits au moins deux équipements mobiles de télécommunication comprenant des moyens de lecture de cet identifiant, le récipient et ledit équipement mobile de télécommunication peuvent comprendre des moyens d'appairage et des supports de mémorisation de données, ces moyens étant agencés de sorte que la lecture de l'identifiant du récipient par les moyens de lecture dudit équipement mobile de télécommunication déclenche un appairage entre le récipient et ledit équipement mobile de télécommunication par leurs moyens d'appairage respectifs.

Selon une autre particularité, le récipient peut comprendre en outre une minuterie fonctionnellement reliée aux autres composants électroniques du récipient pour assurer l'activation ou l'extinction de ladite au moins une source de sollicitation sensorielle au moins en fonction de données prédéterminées stockées sur un support de mémorisation du récipient ou du premier équipement mobile de télécommunication.

Selon une autre particularité, le système de communication peut comprendre en outre des moyens de géolocalisation de l'un desdits équipements mobiles de télécommunication, de sorte que la séquence de signaux sensoriels soit, le cas échéant, générée au moins en fonction de données de géolocalisation correspondantes.

L'invention porte également sur un procédé de communication associé au système de communication présenté ci-dessus.

L'invention porte encore sur un programme d'ordinateur comportant des instructions pour la mise en oeuvre du procédé tel qu'introduit ci-dessus, lorsque lesdites instructions sont réparties sur divers supports de mémorisation du système de communication tel que décrit ci-dessus et exécutées par divers processeurs dudit système de communication.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique de face en perspective d'un récipient,
- la figure 2 est une vue selon la même perspective que la figure 1, du récipient de la figure 1, en éclaté.
- la figure 3 est une vue selon la même perspective que la figure 1, du boîtier du récipient de la figure 2, en éclaté,
- la figure 4 est une vue de dessous de la pièce supérieure du boîtier,
- la figure 5a est une vue de dessus de la pièce inférieure du boîtier,
- la figure 5b est une vue en perspective en coupe selon la ligne Vb-Vb de la figure 5a de la pièce inférieure,
- la figure 6 est une vue de dessous d'un exemple de circuit imprimé,
- la figure 7 est une vue de face en coupe verticale du récipient de la figure 1,
- la figure 8 est une représentation schématique d'un système de communication selon un mode de réalisation de l'invention,
- la figure 9 est un synoptique d'un des équipements mobiles de télécommunication du système de communication selon un mode de réalisation de l'invention,
- les figures 10 et 11 représentent chacune un ordinogramme de l'initialisation du système de communication selon un mode de réalisation du procédé de communication selon l'invention,
- la figure 12 représente un ordinogramme du procédé de communication selon un mode de réalisation de l'invention,
- la figure 13 des vues en coupe du récipient selon plusieurs modes de réalisation de l'invention, et
- la figure 14 représente une vue en coupe d'un boîtier contenant un circuit imprimé et illustre un exemple d'agencement d'un écran DELo.

Sur les différentes figures, les mêmes références désignent des éléments identiques ou similaires.

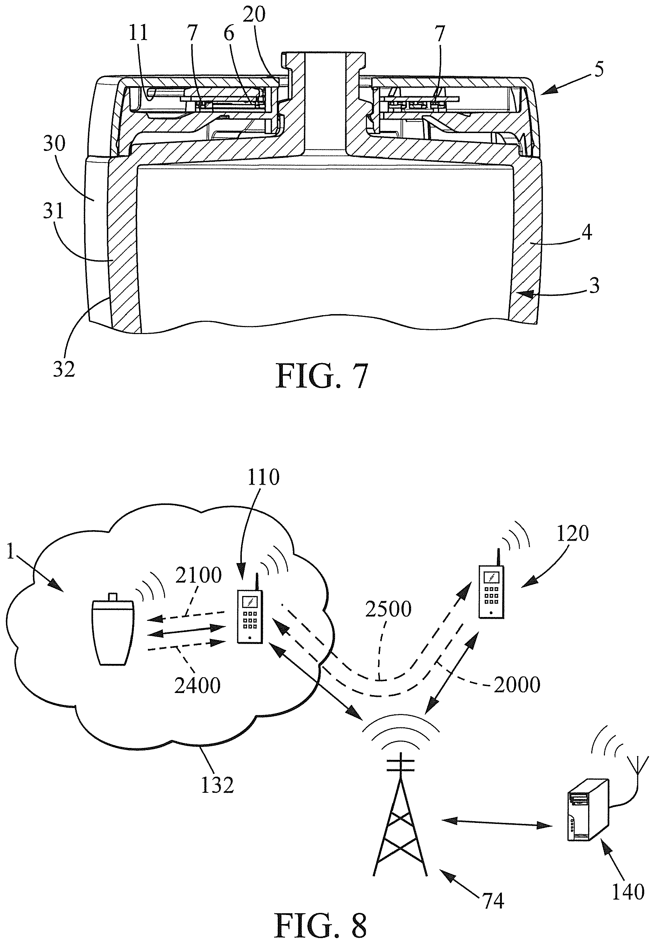

Comme illustré sur la figure 8, le système de communication selon l'invention comprend :
- un récipient 1 pour un produit cosmétique ou pharmaceutique ou un vin ou un spiritueux, et
- au moins deux équipements mobiles de télécommunication, tel que deux équipements mobiles de télécommunication 110, 120.

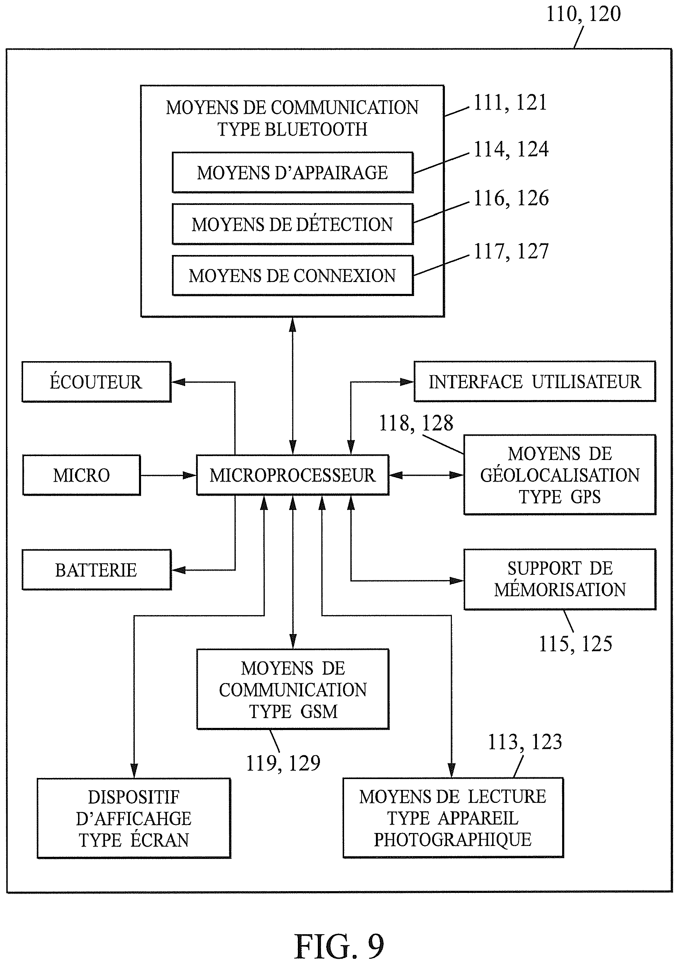

Comme illustré sur la figure 9, chaque équipement mobile de télécommunication peut consister en un terminal existant standard très répandu tels qu'un smartphone ou une tablette. Il peut notamment comprendre un microprocesseur fonctionnellement relié à une pluralité de composants électroniques dont au moins l'un parmi une batterie, une interface utilisateur, un dispositif d'affichage, un support de mémorisation, et des moyens de communication par ondes radio à longue distance. Les équipements mobiles de télécommunication 110, 120 du système sont propres à communiquer entre eux grâce à leurs moyens de communication standards 119, 129 via des réseaux de communication de type GSM, UMTS ou Internet, à travers lequel est éventuellement utilisée la puissance de calcul et/ou de stockage de serveurs informatiques distants (« Cloud computing » selon la terminologie anglo-saxonne).

Le récipient 1 comprend une pluralité de composants électroniques fonctionnellement reliés entre eux dont :
- au moins une source de sollicitation sensorielle 7 agencée pour émettre au moins un signal sensoriel vers l'extérieur du récipient,
- des moyens de communication 131 bidirectionnelle à courte distance par ondes radio, et
- des moyens de contrôle 16 de ladite au moins une source de sollicitation sensorielle.

On entend par « sollicitation sensorielle » l'attirance de l'intérêt d'un utilisateur par la mise en éveil d'un de ses sens, tels que le toucher, l'odorat, le goût et notamment la vue ou l'ouïe. On entend par « signal sensoriel » un signal propre à permettre la mise en éveil d'un des sens de l'utilisateur. Par la suite, on considère, essentiellement à titre d'exemple, une source de lumière en tant que source de sollicitation sensorielle 7 et un signal lumineux ou une séquence lumineuse en tant que signal sensoriel ou séquence de signaux sensoriels. Toutefois, le système de communication n'est pas limité à ce mode de réalisation ; par exemple, la source de sollicitation sensorielle peut être un haut-parleur et le signal sensoriel peut être un signal sonore.

Au moins un premier équipement mobile de télécommunication 110, ci-dessous « premier téléphone mobile », comprend des moyens de communication 111 bidirectionnelle à courte distance par ondes radio. De tels moyens de communication comprennent au moins une antenne, par exemple une antenne connue sous l'appellation « Compact reach XtendTM Bluetooth®, 802.11b/g WLAN Chip Antenna ».

Les moyens de communication 131 bidirectionnelle à courte distance par ondes radio du récipient 1 comprennent au moins une antenne, par exemple une antenne connue sous l'appellation « Compact reach XtendTM Bluetooth®, 802.11b/g WLAN Chip Antenna ».

De cette façon, le récipient est apte à communiquer avec un deuxième téléphone mobile 120 et/ou un serveur informatique distant, par exemple le serveur d'une marque et/ou d'une communauté, par l'intermédiaire du premier téléphone mobile 110, lorsque le premier téléphone mobile est situé dans une zone de couverture 132 des moyens de communication du récipient 1.

Plus particulièrement, les moyens de contrôle 16 du récipient contrôlent la ou les sources de lumière 7 pour générer une séquence lumineuse déterminée par exemple en fonction de données communiquées au récipient, via le premier téléphone mobile 110, par le deuxième équipement mobile de télécommunication 120, ci-dessous «deuxième téléphone mobile », et/ou un serveur informatique distant, par exemple le serveur d'une marque et/ou d'une communauté.

Une séquence lumineuse désigne une suite de commandes d'émission lumineuse par une ou plusieurs LEDs, une émission pouvant durer dans le temps, être pulsée de manière périodique ou non, les LEDs pouvant être traitées de manière identique ou différente, l'intensité pouvant être fixée ou changeante au cours du temps... Par exemple, le micro-processeur peut commander de manière spontanée, périodique et/ou aléatoire une séquence lumineuse.

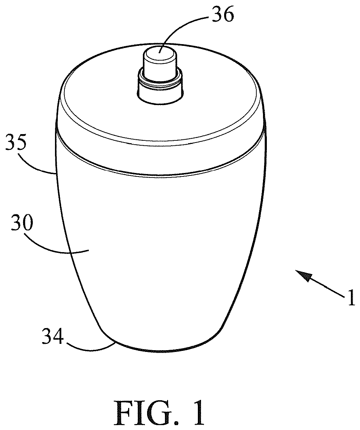

Le récipient 1 est plus particulièrement décrit ci-dessous en références aux figures 1 à 7.

La figure 1 représente schématiquement le récipient 1. Il peut comprendre une portion de pied 34 permettant de le disposer de manière stable sur un support. A titre illustratif, on peut supposer un support horizontal définissant un plan X-Y. La direction Z, normale au plan X-Y, complète le trièdre X-Y-Z. Dans l'exemple présenté, la surface extérieure du récipient 1 est à symétrie de révolution autour de l'axe Z. C'est-à-dire que les directions X et Y sont indifférenciées au vu de la surface extérieure. Toutefois, il pourrait en être autrement.

Le récipient 1 s'étend, selon l'axe Z, depuis la portion de pied 34 en direction d'une portion de tête 35 opposée. Dans l'exemple présenté, le récipient 1 présente une surface extérieure 30 dont la forme s'évase légèrement depuis la portion de pied 34 en direction de la portion de tête 35. Toutefois, il pourrait en être autrement. La portion de tête 35 comporte un organe de distribution 36. Dans l'exemple présenté, l'organe de distribution 36 est le seul moyen pour un utilisateur du récipient d'accéder au contenu du récipient 1. L'organe de distribution 36 comprend par exemple une pompe.

Le contenu du récipient peut être cosmétique. Il s'agit par exemple d'un parfum. Bien que l'invention soit présentée par référence à l'exemple d'un flacon de parfum, l'invention pourrait être appliquée à d'autres types de récipients, de contenus, et de moyens de distribution de ces contenus. Le contenu du récipient peut par exemple être un produit pharmaceutique, un produit cosmétique, tel que crème de soin, sérum, fluide de maquillage, ou un produit alimentaire, tel que des boissons, en particulier, des sodas, bières, vins, champagnes, alcools, spiritueux..., notamment des vins et spiritueux haut de gamme.

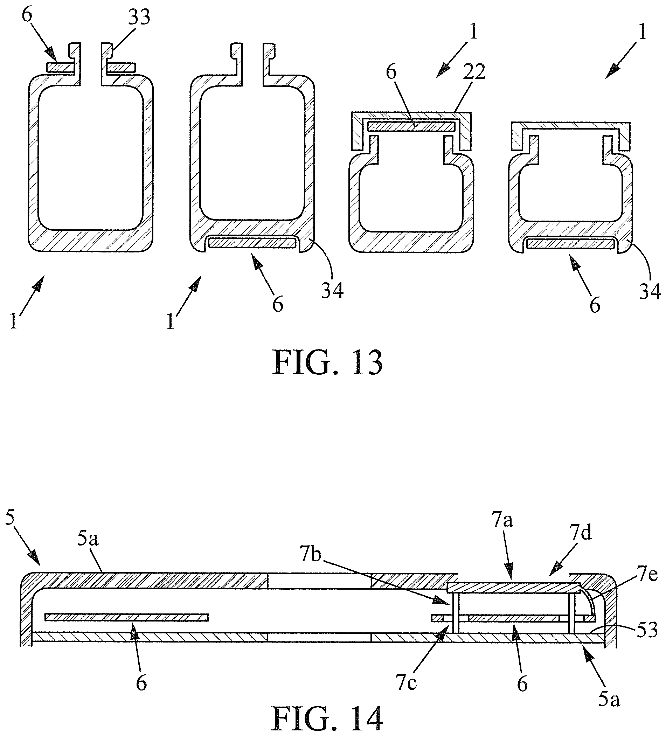

Comme illustré sur la figure 13, le circuit imprimé 6 n'est pas nécessairement agencé autour du col 33 du récipient, mais peut également être agencé dans la base 34 dudit récipient ou en tout autre endroit convenable du récipient (par exemple en étant masqué derrière une plaque décorative ou une étiquette disposée sur le récipient). En outre, le récipient n'est pas nécessairement un récipient pour parfum muni d'une pompe agencée sur un col relativement étroit, mais peut également consister en un pot, par exemple de crème de soin, muni d'un col large ; auquel cas, le circuit imprimé 6 peut être agencé dans un couvercle 22 du pot ou dans la base 34 du pot ou à l'intérieur du pot.

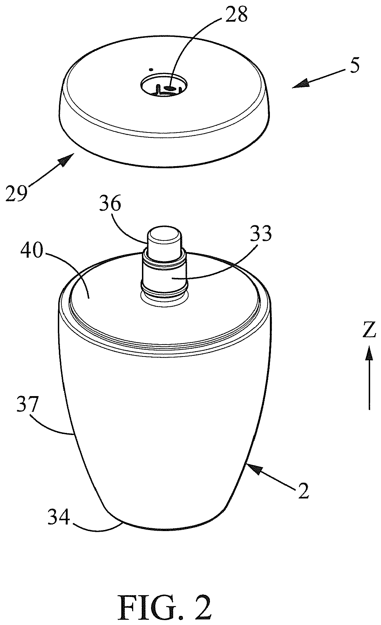

Comme cela est visible sur la figure 2, le récipient 1 est réalisé en deux composants assemblés ensemble. Dans le présent exemple, les deux composants sont assemblés ensemble de manière permanente. Ainsi, en utilisation normale du récipient, il n'est pas prévu de séparer l'un de l'autre les deux composants. L'expression « de manière permanente » doit se comprendre dans l'utilisation normale du récipient, car bien entendu, on ne peut pas empêcher quelqu'un de désolidariser l'un de l'autre les deux composants s'il déploie tous les efforts nécessaires pour y parvenir. Mais cela dépasse l'utilisation normale du récipient. À noter qu'il pourra être souhaitable, pour se conformer à la législation dans certains pays, que le récipient puisse être désassemblé en fin de vie en vue de son tri sélectif, en particulier s'il comporte au moins une source d'énergie, sous forme de pile bouton par exemple. Ce démontage implique de désolidariser l'un de l'autre les deux composants assemblés pour former le récipient 1. Ce démontage peut requérir que l'utilisateur utilise un outil usuel tel qu'un tournevis ou un couteau par exemple, et une méthode adaptée qui lui serait indiquée dans la notice d'utilisation du produit. Ce démontage peut nécessiter une encoche permettant d'insérer l'outil entre les deux composants.

Comme visible sur la figure 2, un premier composant est un réceptacle 2. Le réceptacle est fermé hermétiquement, et contient le produit cosmétique ou pharmaceutique ou le vin ou le spiritueux. Le réceptacle comprend un corps 37 auquel est assemblé l'organe de distribution 36 de manière étanche. Le corps 37 comprend la portion de pied 34, et une portion de corps s'étendant depuis la portion de pied 34. La portion de corps comprend une ou plusieurs parois périphériques (selon la forme prévue pour le récipient 1) et une paroi supérieure 40. Un col 33 est ménagé dans l'une de ces deux parois, notamment dans la paroi supérieure 40. L'organe de distribution 36 est assemblé de manière étanche sur le col 33.

Le corps 37 est par exemple réalisé en verre ou en plastique. On choisira un matériau adapté à l'application. Le corps 37 peut ainsi présenter une paroi extérieure 3 comme visible sur la figure 7. Le corps 37 peut présenter également un décor destiné à former un effet lumineux. Le décor est fourni sur la surface extérieure 30 du corps 37, notamment par exemple sur la surface extérieure de la paroi périphérique du corps 37. Un tel décor peut être réalisé en prévoyant, au niveau de la surface extérieure 30 du corps 37, une région opaque 31 et une région translucide 32. La région opaque 31 peut par exemple être réalisée en fournissant une substance opaque à la surface extérieure du corps 37 par une technique appropriée. On peut également prévoir une région opaque à l'intérieur du réceptacle 2. Par exemple, on fournit une substance opaque sur une face intérieure du corps 37. La substance opaque est alors compatible avec le contenu du réceptacle.

Comme illustré sur la figure 2, le deuxième composant 29 comprend un boîtier 5 définissant le volume extérieur du deuxième composant 29. Dans le présent exemple de réalisation d'un récipient à col, le composant 29 peut comprendre une forme annulaire munie d'une ouverture 28 d'axe Z, par exemple centrale. L'ouverture centrale 28 est dimensionnée pour le passage du col 33. Le boîtier 5 présente une forme complémentaire du réceptacle 2. En particulier, la ou les parois périphériques du boîtier 5 ont une forme correspondant à celle du réceptacle 2 et peuvent être d'épaisseur faible. Un boîtier ne désigne pas nécessairement un produit entièrement fermé. Certaines ouvertures sont possibles. Dans le cas où une face du boîtier est directement en regard avec une face du réceptacle, cette face peut par exemple comporter des ouvertures.

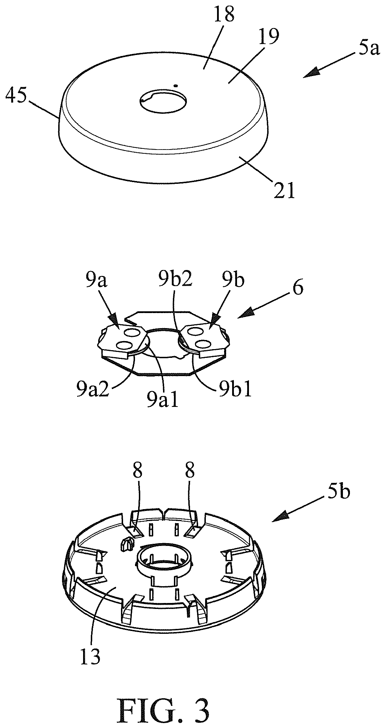

Le composant 29 va maintenant être décrit, dans ce mode de réalisation, plus en détails, par référence à la figure 3.

Le boîtier 5 peut comprendre une pièce supérieure 5a et une pièce inférieure 5b qui peuvent être assemblées ensemble pour réaliser un boîtier fermé. Notamment, le boîtier 5 peut être réalisé étanche. Par « étanche », on comprend ici un degré d'étanchéité permettant de préserver l'intégrité et le bon fonctionnement des composants internes du boîtier en utilisation normale du boîtier. L'utilisation normale du boîtier peut comprendre la présence prolongée de celui-ci dans une pièce humide, notamment une salle de bain. Notamment, les pièces inférieure et supérieure 5b, 5a sont assemblées en force ou par collage. Elles définissent entre elles un volume intérieur V.

Dans le volume intérieur V sont contenus un circuit imprimé 6 et au moins une (dans le présent exemple deux) source d'énergie 9a, 9b. Le nombre de sources d'énergie dépendra de l'énergie à fournir et du volume intérieur V disponible. Les sources d'énergie sont par exemple des piles boutons, qui ont un encombrement et une énergie adaptés.

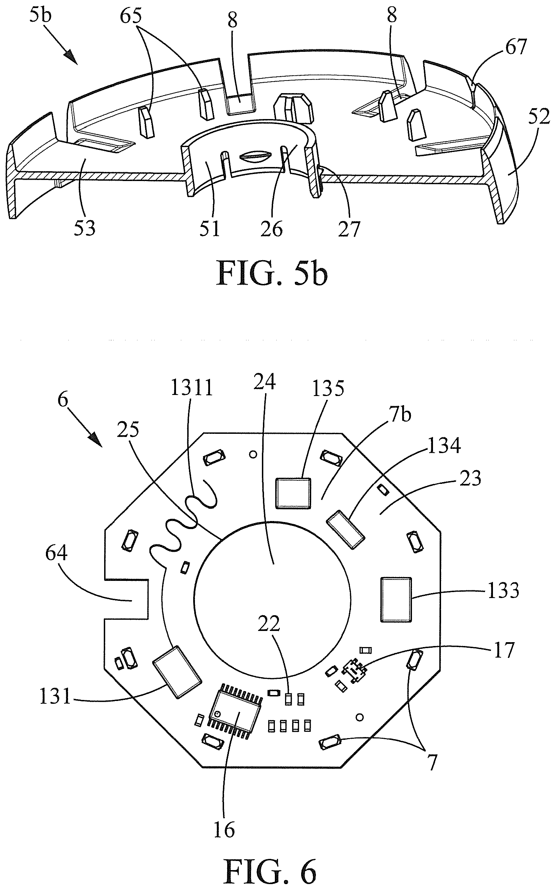

Comme représenté sur la figure 6, le circuit imprimé 6 comprend les moyens de communication 131 du récipient dont son antenne 1311 et les moyens de contrôle 16 de la ou des sources de lumière. Les moyens de contrôle peuvent comprendre un micro-processeur ou un microcontrôleur. Les moyens de communication 131 sont par exemple du type permettant l'implémentation du standard de communication Bluetooth®. Toutefois, d'autres types de moyens de communication peuvent être utilisés qui reposent sur des protocoles de communication différents tels que les protocoles ZigBee® et Wi-Fi®. L'emplacement de l'antenne sur le circuit imprimé impose que les pièces d'habillage 5a et 5b ne se comportent pas comme une cage de Faraday, ce qui limite les applications de finitions métallisées sur la pièce extérieure 5a et/ou d'électrodes d'un éventuel capteur capacitif. Au moins il convient de limiter la taille et la position des surfaces rendues conductrices en les éloignant de la zone de l'antenne.

En particulier, le circuit imprimé 6 est interposé, selon l'axe Z, entre la pièce inférieure 5b et la pièce supérieure 5a. Les sources d'énergies 9a, 9b sont par exemple insérées dans des boîtiers adaptés à cet usage et reliés au circuit imprimé 6, notamment lesdits boîtiers peuvent être soudés au circuit imprimé 6.

La pièce supérieure 5a comprend une plaque supérieure de laquelle s'étend une jupe 45. La pièce 5a présente une face intérieure 11 et une face extérieure 19 opposée. La face extérieure 19 est la principale face visible du boîtier. En effet, la pièce inférieure 5b est disposée entre la pièce supérieure 5a et le réceptacle 2. La pièce supérieure 5a peut être réalisée opaque. Elle peut être réalisée avec un aspect extérieur esthétiquement approprié, par exemple un vernis, une métallisation et/ou des motifs décoratifs par exemple. Ainsi, la pièce supérieure 5a cache complètement à la vue d'un utilisateur extérieur au flacon le circuit imprimé 6, voire la pièce inférieure 5b. Il est également envisagé qu'une partie de la pièce 5b soit visible ; cette partie peut prendre par exemple la forme d'un anneau translucide situé à l'interface avec le récipient (à la base de la jupe de la pièce 5a) ou au niveau de l'ouverture centrale 28 pour former un anneau autour du col.

Selon un mode de réalisation, le récipient 1 comprend en outre au moins un capteur 17 agencé pour détecter un événement tel qu'une manipulation du récipient ou une information contextuelle, par exemple un changement brusque de luminosité autour du récipient. Le capteur est fonctionnellement relié aux autres composants électroniques du récipient. Il est par exemple au moins partiellement supporté par le circuit imprimé 6. Le capteur peut être un simple interrupteur disposé en périphérie du boitier 5. En alternative, le capteur peut fonctionner à la façon d'un interrupteur sensitif agencé de façon à capter un changement de capacitance entre deux électrodes, ce changement témoignant de la présence immédiate ou de la proximité ou du contact de quelque chose qui, le plus souvent, va être un doigt d'un utilisateur. Le capteur peut encore être un capteur optique capable de détecter que la lumière de la pièce, par exemple une salle de bain, dans laquelle le récipient est situé, est allumée ou éteinte.

Le ou les capteurs du récipient (par exemple, capteur inertiel pour détection de mouvement, capteur capacitif pour détection de proximité et/ou de contact, capteur de lumière pour détecter des variations de niveau lumineux ambiant) peuvent ainsi être destinés à détecter :
- des actions de l'utilisateur,
- des caractéristiques personnelles de l'utilisateur, telles que par exemple le degré d'hydratation de sa peau...
- des propriétés (ou changements d'état) du produit contenu dans le récipient, tel que par exemple son niveau d'utilisation, son degré de péremption, son degré d'hydratation, sa contamination éventuelle...

Le ou les capteurs du récipient peuvent en outre être destinés à envoyer des informations sur ces actions ou propriétés via le réseau de communication à l'utilisateur du deuxième équipement mobile de télécommunication (smartphone ou tablette...) et/ou au serveur d'une marque ou d'une communauté.

Selon d'autres alternatives, le capteur 17 peut être choisi parmi un capteur mécanique agencé conjointement à l'organe de distribution 36 pour en capter l'actionnement et un capteur inertiel, par exemple un accéléromètre, tel que celui connu sous la référence « MMA8452Q 3-Axis 12/8-bit Digital Accelerometer », adapté pour détecter un mouvement du circuit imprimé 6 (dû à un mouvement du récipient le portant).

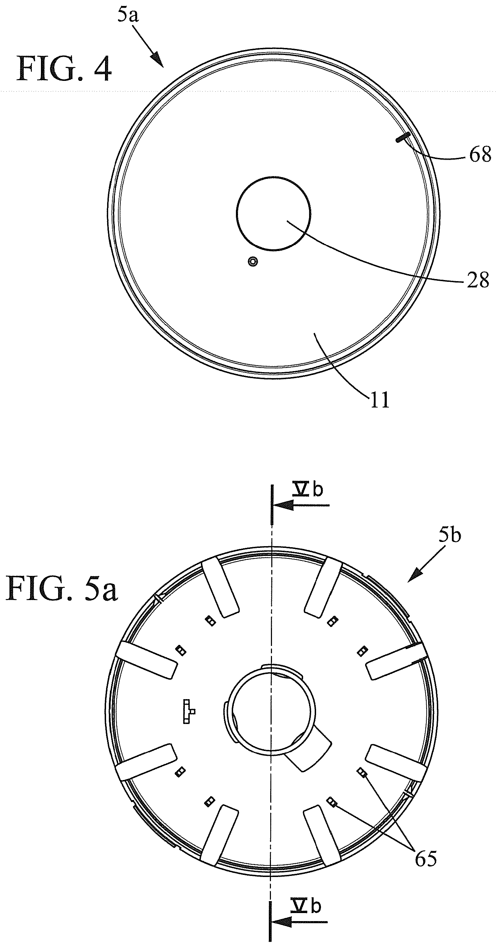

Les figures 5a et 5b représentent maintenant schématiquement la pièce inférieure 5b selon un exemple de réalisation.

Selon cet exemple, la pièce inférieure 5b est sensiblement inscrite dans le volume circonscrit par la pièce supérieure 5a. Elle comporte une forme complémentaire de la pièce supérieure 5a. Elle comporte une collerette annulaire radialement intérieure 51, une collerette annulaire radialement extérieure 52, et une plaque 53 s'étendant entre ces deux collerettes.

La collerette annulaire radialement intérieure 51 comprend une surface radialement intérieure et une surface radialement extérieure opposée. La surface radialement intérieure est adaptée pour coopérer avec le col 33 du flacon. Ainsi, le boîtier 5 est monté sur le col 33 du flacon par cet intermédiaire. On prévoit par exemple une fixation par clipsage. D'autres réalisations sont possibles.

La collerette annulaire radialement extérieure 52 coopère avec la face intérieure 11 (Cf. figures 4 et 7) de la jupe 45 de la pièce supérieure 5a.

La plaque 53 comprend un certain nombre des fonctions de la pièce inférieure 5b. La plaque 53 propose par exemple une indexation en rotation du circuit imprimé 6. On prévoit par exemple un positionnement latéral (c'est-à-dire dans le plan X-Y) du circuit imprimé 6. Pour cela, on peut prévoir des ergots de positionnement latéral 65. Les ergots de positionnement latéral 65 font saillies verticalement vers le haut depuis la surface supérieure de la plaque 53. On en prévoit plusieurs sur la périphérie de la plaque 53. Ils sont par exemple prévus par paire, une paire étant associée à un bord rectiligne du circuit imprimé 6. Les ergots de positionnement latéral 65 peuvent également former butées sur la face intérieure 11 de la pièce supérieure 5a, pour définir la position relative de la pièce supérieure 5a et de la pièce inférieure 5b selon l'axe Z. D'autres réalisations sont possibles pour la butée selon l'axe Z.

La plaque 53 porte des ouvertures 8 au droit de l'emplacement des LEDs sur le circuit imprimé dans sa position assemblée, de manière à permettre la transmission de lumière des LEDs vers le réceptacle 2. La figure 6 représente un circuit imprimé 6, et notamment la face inférieure du circuit imprimé, selon un mode de réalisation. Le circuit imprimé comporte un support mince 23 et des pistes (non représentées) reliant électriquement les divers composants électroniques entre eux. Il peut consister en un circuit imprimé simple face, double ou multicouches.

Le circuit imprimé 6 comporte une forme adaptée pour l'application. Notamment, dans le présent exemple, il peut comporter une forme annulaire, avec une ouverture centrale 24 dimensionnée pour être enfilée avec jeu sur la collerette annulaire radialement intérieure 51 de la pièce inférieure 5b du boîtier 5.

Le circuit imprimé 6 présente également une encoche 64 présentant une forme adaptée pour coopérer avec une saillie complémentaire de la pièce inférieure 5b pour l'indexation en rotation.

Le circuit imprimé 6 peut présenter une forme de disque creux. En alternative, le pourtour périphérique du circuit imprimé 6 peut présenter une forme polygonale (encoche 64 mise à part). On choisit par exemple une forme octogonale, comme représentée.

Par exemple, le pourtour périphérique du circuit imprimé a une plus grande dimension comprise entre 3 cm et 6 cm et le pourtour intérieur du circuit imprimé a une plus grande dimension comprise entre 1 cm et 3 cm.

Comme déjà introduit plus haut, le circuit imprimé 6 porte le micro-processeur 16. Le micro-processeur 16 peut être par exemple le microprocesseur connu sous la référence CC253X ou CC2540. Le micro-processeur 16 peut être préprogrammé pour accomplir certaines fonctions, comme cela sera expliqué ci-après. Le circuit imprimé 6 peut porter les sources de lumière 7. On choisit par exemple des LEDs (pour diodes électroluminescentes ou Light-Emitting Diodes selon la terminologie anglo-saxonne), par exemples des LEDs RVB (rouge-vert-bleu) permettant des mises en valeur colorées avec des possibilités de variations significatives. En alternative ou en complément, on peut choisir un dispositif d'affichage, par exemple un afficheur numérique, un écran LCD (non représenté) ou des LEDs organiques DELo (en anglais OLED pour Organic Light-Emitting Diode) formant éventuellement un écran 7a. Le dispositif d'affichage peut éventuellement être flexible pour s'adapter à un récipient ou à un boîtier de forme complexe (non plane).

Les LEDs présentent plusieurs avantages pour l'illumination de flacons et pots cosmétiques. Leur taille est très réduite, ce qui offre la possibilité de réaliser des sources de lumière très ponctuelles ou présentant toute forme souhaitée en assemblant plusieurs LEDs. Elles ont une très faible consommation électrique (quelques dizaines de milliwatts) et un bon rendement, donc une très faible déperdition de chaleur, évitant ainsi tout risque de déformation des pièces constitutives du récipient 1, et notamment du boîtier 5, ainsi que tout risque de détérioration du produit contenu dans le récipient 1. De nombreuses couleurs sont disponibles. Elles sont faciles à monter sur un circuit imprimé. Elles fonctionnent en très basse tension (TBT), ce qui est un gage de sécurité.

Chaque LED peut être alternativement dans un état actif, dans lequel elle émet une lumière, et dans un état inactif, dans lequel elle n'émet pas de lumière. Chaque LED a un spectre d'illumination qui lui est propre, identique ou différente de celles des autres LEDs. Le micro-processeur 16 est programmé pour commander le déclenchement des LEDs. Ainsi, le micro-processeur peut déclencher le passage des LEDs de leur état inactif à leur état actif, et *vice versa.*

Les LEDs sont disposées sur la face inférieure du circuit imprimé 6. On prévoit, par exemple, que les LEDs soient disposées le plus loin possible, radialement, du centre du circuit imprimé 6. Notamment, dans le cas d'un circuit imprimé polygonal, on prévoit une LED dans chaque coin formé entre deux arêtes adjacentes. Ainsi, la surface du circuit imprimé est optimisée, et l'espace central est disponible pour y placer les autres composants électroniques.

L'écran 7a formé des LEDs organiques peut être agencé de la façon illustrée sur la figure 14. Plus particulièrement, l'écran est supporté par des reliefs 7b s'étendant depuis le circuit imprimé 6. En alternative, les rainures 7b s'étendent à travers le circuit imprimé par des trous 7c pratiqués dans le circuit imprimé à cet effet ; plus particulièrement, les rainures 7b s'étendent depuis la plaque 53 de la pièce inférieure 5b du boîtier 5. Les rainures sont dimensionnées pour plaquer l'écran 7a contre une ouverture 7d pratiquée dans le récipient 1, ou un couvercle du récipient, ou plus particulièrement dans la pièce supérieure 5a du boîtier 5, de sorte que l'écran apparaisse à une vue extérieure au récipient. Il est à noter que la connectique 7e entre l'écran 7a et le circuit imprimé 6 est alors avantageusement courte, et plus particulièrement de l'ordre de quelques millimètres de long.

Le microprocesseur 16 peut définir, pour chaque source lumineuse 7, et notamment de manière corrélée pour au moins deux sources lumineuses 7, voire toutes les sources lumineuses, l'une et/ou l'autre des caractéristiques suivantes, éventuellement variable au cours du temps :
- un instant de début d'illumination,
- un instant de fin d'illumination,
- une durée d'illumination,
- une intensité d'illumination.

Comme déjà discuté plus haut, le circuit imprimé 6 comporte également le capteur 17. Le capteur 17 est adapté pour détecter un événement, tel qu'une manipulation du récipient, et pour transmettre un signal correspondant au micro-processeur 16. Le capteur 17 transmet alors un signal adapté au microprocesseur qui commande un effet lumineux éventuellement préprogrammé en fonction. Le micro-processeur 16 peut en outre envoyer des informations correspondant au signal transmis par le capteur 17 à l'un des téléphones mobiles et/ou au serveur distant via un réseau de télécommunication 74.

En variante, le micro-processeur 16 peut recevoir une commande depuis l'extérieur. Notamment, comme représenté sur la figure 8, le micro-processeur peut recevoir une commande d'un serveur distant 140 ou d'un terminal mobile 120 via un réseau de télécommunication 74.

Comme représenté sur la figure 6, le récipient 1 peut comprendre une minuterie 133. La minuterie 133 peut par exemple comprendre un résonateur cristallin à base de quartz fonctionnant dans la gamme des mégahertz ou des kilohertz. La minuterie est fonctionnellement reliée aux autres composants électroniques du récipient, et notamment au microprocesseur 16. La minuterie peut être supportée par le circuit imprimé 6. La minuterie assure l'activation ou l'extinction de la ou des sources de lumière 7, par exemple en fonction de données prédéterminées stockées sur un support de mémorisation 135 du récipient.

La minuterie 133 peut permettre de commander la répétition d'une séquence lumineuse à intervalles de temps réguliers jusqu'à ce qu'un événement soit détecté. La minuterie peut également permettre d'interrompre la répétition de la séquence lumineuse commandée, après un certain temps passé sans qu'un événement n'ait été détecté. L'absence de détection d'événement peut alors être interprétée comme correspondant à l'absence de l'utilisateur à qui la séquence lumineuse est destinée. Une consommation d'énergie inutile est ainsi évitée. La minuterie peut encore permettre de commander l'activation de la ou des sources de lumière à heure(s) fixe(s).

Une minuterie 133 et un support de mémorisation 135 ne sont pas essentiels en eux-mêmes, notamment dans la mesure où la fonction de la minuterie peut être tenue par une horloge du microprocesseur 16 et dans la mesure où la capacité de stockage du microprocesseur 16 est suffisante.

Les composants électroniques du récipient 1 peuvent être fournis sur l'une ou l'autre des faces du support mince 23 et raccordés électriquement avec le reste du circuit par des trous traversants éventuellement métallisés.

La figure 7 représente le récipient assemblé.

On dispose le circuit imprimé 6 sur la pièce inférieure 5b. Le circuit imprimé est disposé avec sa face portant les LEDs tournée vers la pièce inférieure 5b. L'orientation autour de l'axe Z du circuit imprimé 6 est par exemple définie par la coopération de l'encoche 64 et de la saillie complémentaire de la pièce inférieure 5b pour former un dispositif d'indexation en rotation. Le bord périphérique extérieur du circuit imprimé coopère avec les ergots de positionnement latéral 65 de la pièce inférieure 5b et le bord périphérique intérieur coopère avec le bord intérieur 25 du circuit imprimé enfilé autour de la surface radialement extérieure 27, pour définir le positionnement latéral du circuit imprimé 6.

Puis la pièce supérieure 5a est assemblée à la pièce inférieure 5b pour fermer le boîtier 5 et définir le volume intérieur V. L'orientation de la pièce supérieure 5a par rapport à la pièce inférieure 5b est définie par un dispositif d'indexation en rotation. Par exemple, la collerette annulaire radialement extérieure 52 comprend une fente 67, coopérant avec une nervure 68 de la pièce supérieure 5a. Le boîtier 5 est fermé par exemple par encliquetage.

Le boîtier 5 est alors assemblé au réceptacle 2, comme expliqué ci-dessus, pour former un récipient 1. L'organe de distribution 36 peut être assemblé au col 33 au choix avant ou après l'assemblage du boîtier 5.

Comme expliqué ci-dessus, dans ce mode de réalisation, il n'est pas prévu de recharger ou remplacer les sources d'énergie. Par conséquent, la partie électronique du récipient 1 est complètement escamotée pour l'utilisateur. Les sources d'énergie et les LEDs (nombre, consommation, luminosité, tension de seuil) sont alors choisies pour que les sources d'énergie soient suffisantes pour l'alimentation du récipient pour sa durée de vie présumée (fonction du volume contenu, à le supposer non rechargeable). Un nombre réduit de LEDs risque d'entraîner des effets parasites de points lumineux, mais entraînera une consommation énergétique inférieure. La consommation des LEDs est évidemment un facteur influant sur le type d'effets lumineux pouvant être proposés (durée, notamment), et sur la durée de vie du produit. La luminosité maximale peut être utile pour certains effets lumineux, mais n'est pas nécessairement recherchée. La tension de seuil la plus basse permet d'étendre la durée de vie du produit quand les sources d'énergie ne fournissent plus qu'une tension faible. Toutefois, en variantes, on pourra prévoir un montage amovible de la pièce supérieure sur la pièce inférieure afin de remplacer les sources d'énergie, ou un connecteur à un dispositif de charge des sources d'énergie alors rechargeables. En alternative, on peut prévoir une trappe amovible permettant de changer les piles, ce qui est particulièrement pertinent par exemple dans le cas d'une application aux vins ou aux spiritueux avec un circuit imprimé 6 positionné au pied du récipient.

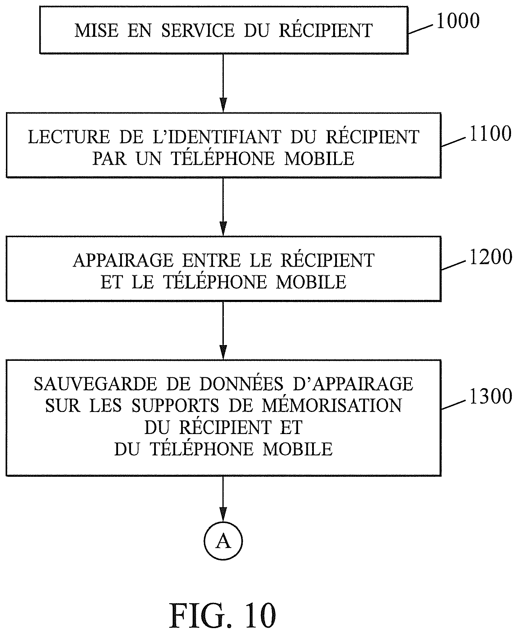

La mise en service du système de communication et l'appairage entre le récipient et l'un au moins des deux téléphones mobiles vont maintenant être décrits notamment en référence à la figure 10.

Le récipient peut comprendre un dispositif de mise en service (non représenté). Le dispositif de mise en service est adapté pour prendre alternativement un état inhibé inhibant au moins la mise en oeuvre des sources lumineuses 7, et un état actif autorisant au moins la mise en service 1000 des sources lumineuses 7. Un tel dispositif de mise en service peut avantageusement empêcher toute consommation d'énergie avant que l'utilisateur n'ait acquis le récipient 1. En effet, le récipient conditionné va être déplacé, de sorte qu'un éventuel capteur 17, s'il est de type inertiel ou capacitif, risque de commander l'émission de lumière alors que le récipient est emballé. Le dispositif de mise en service présente un intérêt particulier en termes d'économie d'énergie, notamment dans le cas où les sources d'énergie 9a, 9b ne sont ni remplaçables, ni rechargeables.

Le dispositif de mise en service peut être porté au moins en partie par le circuit imprimé 6. Le dispositif de mise en service comprend par exemple un bouton interrupteur actionnable par un utilisateur pour connecter électriquement les sources d'énergie 9a, 9b au circuit électrique du circuit imprimé 6.

Alternativement, le dispositif de mise en service peut comprendre une languette d'activation. Dans son état inhibant, la languette d'activation s'oppose par exemple à la mise en contact électrique des sources d'énergie avec le circuit électrique du circuit imprimé 6. Par exemple, la languette d'activation est réalisée en un matériau isolant. La languette fait en partie saillie du récipient par le boitier 5, et, par une partie opposée, vient s'intercaler entre les sources d'énergie et le circuit électrique du circuit imprimé 6. L'utilisateur doit tirer sur la partie de la languette d'activation faisant saillie jusqu'à désolidariser la languette d'activation du récipient pour mettre en contact électrique les sources d'énergie 9a, 9b du récipient avec les autres composants électroniques du récipient via les pistes du circuit imprimé 6.

Une fois le dispositif passé dans son état actif, une ou plusieurs séquences lumineuses préprogrammées peuvent être émises. De nombreuses variantes de réalisation sont possibles.

Le récipient peut être associé à un identifiant. L'identifiant est par exemple un tag tel qu'un code-barres en deux dimensions ou un « Bleam ». Il peut être imprimé sur le récipient par exemple sur la surface inférieure de sa base 34 ou sur la languette d'activation du récipient. Par exemple, le premier téléphone mobile 110 comprend des moyens de lecture 113 de cet identifiant.

Le récipient et le premier téléphone mobile comprennent des moyens d'appairage 124, 114, de sorte que, à la lecture de l'identifiant 1100, un appairage 1200 entre le récipient et le premier téléphone mobile est automatiquement déclenché. Cet appairage comprend un échange de données entre le récipient et le premier téléphone mobile. Cet échange de données permet de définir des données d'appairage que le récipient et le premier téléphone mobile peuvent stocker 1300 sur leurs supports de mémorisation respectifs 125, 115. Si la lecture de l'identifiant 1100 est réalisée lorsque le premier téléphone portable 110 n'est pas dans la zone de couverture 132 des moyens de communication 131 du récipient, l'appairage 1200 peut être mis dans une liste de tâches du premier téléphone mobile pour être implémenté automatiquement lorsque le premier téléphone mobile se trouvera dans la zone de couverture des moyens de communication du récipient. Les données d'appairage servent à permettre des connexions futures entre le premier téléphone mobile et le récipient.

Une fois l'appairage effectué avec succès, le récipient 1 émet par exemple une séquence lumineuse préprogrammée d'appairage réussi.

Le premier téléphone mobile 110 peut comprendre des moyens de détection 116 de la présence du récipient 1 dans la zone de couverture de ses moyens de communication 111 à courte distance, ou *vice versa.* Plus particulièrement, le téléphone mobile interroge, par exemple à intervalles de temps réguliers, son environnement en envoyant par ondes radio à courte distance des messages signalant sa présence. En permanence ou à certaines heures du jour (de façon contrôlée par exemple par la minuterie 133), le récipient se trouve dans un mode d'écoute de tels messages d'interrogation et à réception de l'un d'eux y répond pour signaler sa présence au premier téléphone mobile. Des variantes utilisant par exemple le récipient dans un mode dit de veille sont également envisageables. Plus particulièrement, lorsque le récipient est dans le mode de veille, la plupart de ses fonctions sont inhibées temporairement dans le but de diminuer sa consommation électrique. Le récipient peut passer en mode veille au terme d'une période d'inactivité déterminée, par exemple par l'absence de détection d'événement par le capteur 17 depuis un certain temps. Plus particulièrement, notamment lors de leur appairage, le premier téléphone mobile et le récipient peuvent avoir conclu de tenter de se détecter, par envoi d'un message de signalisation de présence et par écoute d'un tel message, pendant un laps de temps d'activité donné, par exemple de quelques secondes, défini à intervalles de temps donné, par exemple 2 à 3 minutes. Ainsi, pendant un temps égal à un intervalle de temps auquel est retranché le laps de temps d'activité, la plupart des fonctions du récipient, et notamment sa fonction d'écoute, peuvent être inactives, car il est su qu'aucune activité n'est prévue pendant ce temps. Cette synchronisation permet donc d'économiser les ressources en énergie du premier téléphone mobile et surtout du récipient qu'ils fonctionnent en interrogateur de la présence de l'autre ou en récepteur d'un message d'interrogation de présence.

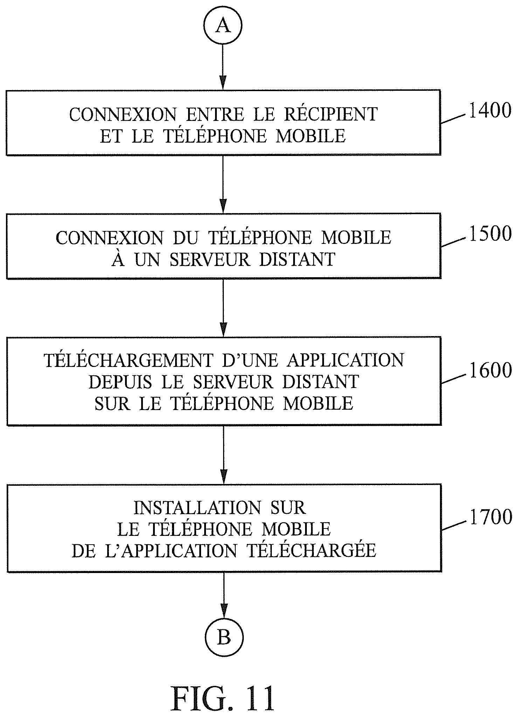

L'initialisation des futures communications entre le récipient et l'un au moins des deux téléphones mobiles va maintenant être décrite notamment en référence à la figure 11.

Via des moyens de connexion automatique 117, le premier téléphone mobile 110 et le récipient 1 sont prêts à se connecter 1400 entre eux en utilisant les données d'appairage stockées sur leurs supports de mémorisation 115, 135 respectifs. Cette connexion peut être automatique ou une autorisation de connexion peut être automatiquement demandée par le premier téléphone mobile 110 à son utilisateur. La connexion 1400 comprend notamment une synchronisation des moyens de communication 111, 131 du premier téléphone mobile 110 et du récipient 1 entre eux. Cette synchronisation permet notamment une interprétation correcte des commandes transmises par le premier téléphone mobile au récipient, et *vice versa,* lors d'une session de communication subséquente.

Une première connexion 1400 du premier téléphone mobile 110 avec le récipient 1 peut déclencher la connexion 1500 dudit téléphone mobile à un serveur distant 140 du système de communication. A cette fin, des données de connexion au serveur distant peuvent avoir été stockées sur le microprocesseur 16 du récipient et communiquées automatiquement au téléphone mobile 110, par exemple lors de la première connexion. Selon une variante, les données de connexion au serveur distant peuvent avoir été codées dans le code-barres bidimensionnel identifiant le récipient, puis décodées par le téléphone mobile suite à la lecture 1100 de l'identifiant.

Sur le serveur distant 140 sont stockées des applications dédiées à interfacer les différents équipements communicants du système. Par exemple, une page web s'ouvre sur le premier téléphone mobile 110 pour proposer une pluralité d'applications au téléchargement.

Plusieurs types d'applications peuvent être prévus. Notamment, une première application peut être dédiée à être téléchargée, puis installée, sur le premier téléphone mobile, et une deuxième application peut être dédiée à être téléchargée, puis installée, sur le deuxième téléphone mobile. Les premier et deuxième téléphones mobiles ne jouent pas nécessairement le même rôle dans le système de communication selon l'invention. Le deuxième téléphone mobile est essentiellement adapté pour communiquer avec le récipient, alors que le premier téléphone mobile sert essentiellement de passerelle de communication entre le récipient et le deuxième téléphone mobile. Dès lors que les rôles des premier et deuxième téléphones mobiles dans le système de communication selon l'invention sont essentiellement asymétriques, il est avantageux de prévoir différentes applications.

Comme illustré sur la figure 9, le deuxième téléphone mobile 120 peut comprendre des moyens équivalents à ceux du premier téléphone mobile 110. Le deuxième téléphone mobile 120 peut notamment comprendre des moyens de communication 121 par ondes radio à courte distance, des moyens de lecture 123 de l'identifiant du récipient, des moyens de détection 126 du récipient et de connexion 127 automatique avec le récipient. Ainsi, le deuxième téléphone mobile peut implémenter les mêmes étapes de communication que le premier téléphone mobile, par exemple jusqu'à se connecter au serveur distant 140. D'autres manières de faire connaître, au deuxième téléphone mobile 120, les données de connexion au serveur distant 140 sont également envisageables. Par exemple, ces données peuvent être transmises par le premier téléphone mobile 110 au deuxième téléphone mobile 120 par communication hertzienne standard.

Une fois le téléphone mobile 110, 120 connecté 1500 au serveur distant, une ou plusieurs applications peuvent être téléchargées 1600 et installées 1700 sur le téléphone mobile 110, 120.

Chaque application peut permettre de définir une banque de données personnelles comprenant des données telles que des préférences d'utilisation du système de communication selon l'invention. Par exemple, des données calendaires ou des données de connexion à un compte de service de réseautage social peuvent être renseignées. Ces données permettent à l'application de proposer à l'utilisateur des rappels d'événements calendaires, des raccourcis pour partager des communications échangées via le système de communication selon l'invention avec des contacts du réseau social...

L'application permet également de définir une table de correspondance entre des données communiquées depuis le deuxième téléphone mobile 120 et une séquence lumineuse à générer. Généralement, la table de correspondance comprend des données d'entrée et des données de sortie et fait correspondre, aux données d'entrée, les données de sortie. Par exemple, l'utilisateur du deuxième téléphone mobile 120 peut, via l'application, définir une correspondance entre des données d'entrée comprenant une suite de caractères alphanumériques ou une icône qu'il a renseignée, ou qu'il a sélectionnée parmi un ensemble de suites de caractères alphanumériques ou d'icônes proposé, et des données de sortie correspondant à une séquence lumineuse que l'utilisateur a définie, ou qu'il a sélectionnée parmi un ensemble de séquences lumineuses proposé. En alternative, les données d'entrée peuvent être déterminées sur la base des données communiquées depuis le deuxième téléphone mobile 120, par exemple en fonction de la nature, du poids (en octet), de la longueur (en caractères) de ces données communiquées.

Les données et la table de correspondance renseignées par chaque utilisateur via son téléphone mobile peuvent être stockées sur le serveur distant 140 et/ou sur le support de mémorisation 115, 125 de son téléphone mobile 110, 120 et/ou de l'autre téléphone mobile et/ou sur le « Cloud ».

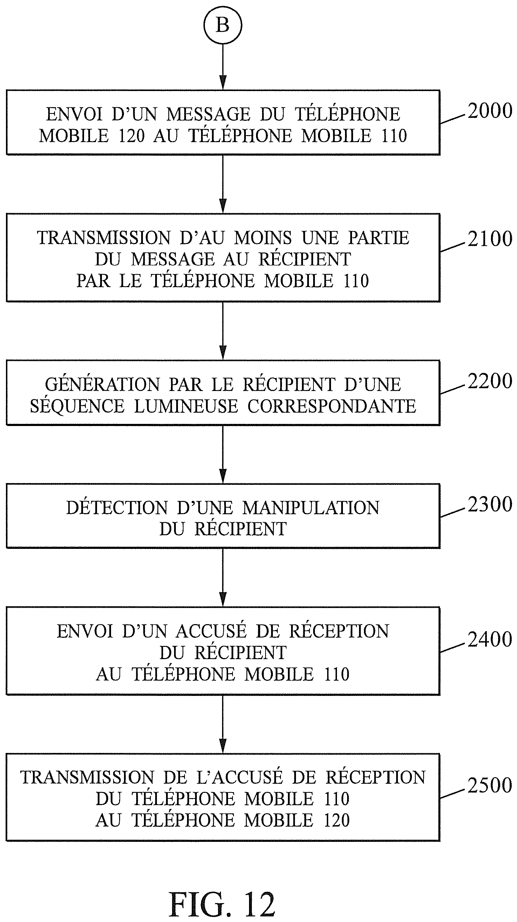

Un mode de réalisation du procédé de communication selon l'invention va être maintenant décrit notamment en référence aux figures 8 et 12.

L'utilisateur du deuxième téléphone mobile 120 peut ouvrir son application. Par exemple, l'ouverture de l'application déclenche l'affichage sur l'écran du deuxième téléphone mobile d'une interface graphique, fournie par l'application installée, permettant une communication visuelle et interactive avec l'utilisateur. L'interface graphique peut plus particulièrement comprendre un fond d'écran, par exemple une photographie des utilisateurs des premier et deuxième téléphones mobiles, une indication du nom de la ville et de l'horaire local où se situe chacun des utilisateurs des premier et deuxième téléphones mobiles, une pluralité de composants logiciels interactifs. Chaque composant logiciel interactif peut permettre d'obtenir, et éventuellement modifier, des informations relatives aux communications réalisées ou réalisables via le système de communication. Par exemple, un premier composant logiciel interactif permet d'obtenir des informations de messages prédéterminés, un deuxième composant logiciel interactif permet d'obtenir des informations de messages reçus et lus, un troisième composant logiciel interactif permet d'obtenir des informations de messages reçus et non lus, et un quatrième composant logiciel interactif permet d'obtenir et modifier les données de sa banque de données personnelles. L'utilisateur du deuxième téléphone mobile 120 peut ainsi sélectionner une suite de caractères alphanumériques ou une icône. Cette sélection est réalisée par exemple par appui tactile sur l'écran du téléphone mobile. Cette sélection peut déclencher l'affichage de menus, de barres de menus ou de sous-menus. Par exemple, la sélection du premier composant logiciel interactif déclenche l'affichage d'une barre de menu et d'un menu correspondant à un premier composant sélectionnable de la barre de menu. Le menu peut comprendre une pluralité de nouveaux composants logiciels interactifs, chacun prenant par exemple la forme d'une icône et permettant, par sa sélection, l'émission d'un message correspondant via le système de communication. Par exemple, la sélection du deuxième composant logiciel interactif déclenche l'affichage d'icônes précédemment reçus selon une configuration particulière ; à titre d'exemple, l'icône correspondant au message le plus récent est situé sensiblement au centre de cet affichage et les icônes correspondant aux dix messages précédemment reçus sont répartis sur cet affichage autour de l'icône correspondant au message le plus récent, les icônes correspondant aux messages les plus anciens étant représentés plus petits que les icônes correspondant aux messages les plus récents.

A la sélection réalisée correspondent, via la table de correspondance, au moins des données de commandes d'une séquence lumineuse.

Un message est envoyé 2000 au premier téléphone mobile 110, qui comprend les données correspondant à la sélection réalisée et/ou les données de commandes de la séquence lumineuse correspondant à la sélection réalisée, suivant que la table de correspondance ait été stockée ou pas sur le deuxième téléphone mobile.

Dans le cas où la table de correspondance n'est stockée que sur le serveur distant 140, les données correspondant à la sélection réalisée sont envoyées par le deuxième téléphone mobile au serveur distant qui retrouve, via la table de correspondance, les données de commandes de la séquence lumineuse correspondant à la sélection réalisée. Le serveur distant envoie lesdites données de commandes, et éventuellement transmet les données correspondant à la sélection réalisée, au premier téléphone mobile.

Dans le cas où la table de correspondance n'est stockée que sur le premier téléphone mobile, les données correspondant à la sélection réalisée sont envoyées par le deuxième téléphone mobile au premier téléphone mobile, directement ou par l'intermédiaire du serveur distant. Le premier téléphone mobile retrouve les données de commandes de la séquence lumineuse correspondant à la sélection réalisée via la table de correspondance.

En réponse à la réception de ce message, le premier téléphone mobile 110 peut éventuellement afficher la suite de caractères alphanumériques ou l'icône reçue sur son dispositif d'affichage. Egalement, en réponse à la réception du message, le premier téléphone mobile 110 transmet 2100, par ondes radio à courte distance, les données de commandes de la séquence lumineuse au récipient 1. A réception de telles données, le récipient génère 2200 la séquence lumineuse commandée. La génération de la séquence lumineuse peut dépendre d'une information contextuelle. Par exemple, lorsque le récipient est situé dans une salle, telle qu'une salle de bain, la séquence lumineuse n'est générée que si le capteur optique du récipient détecte que cette salle n'est pas dans l'obscurité, ou que cette salle est éclairée. La caractérisation de l'environnement du récipient ou de son évolution par le biais d'au moins un capteur 17 du récipient est donc avantageusement prise en compte pour juger de la pertinence d'émettre immédiatement ou ultérieurement la séquence lumineuse commandée en fonction d'une présomption de présence correspondante du récipiendaire dans la salle où le récipient est situé. En cas de présomption d'absence du récipiendaire dans la salle où le récipient est situé, le premier téléphone mobile peut se contenter d'afficher la suite de caractères alphanumériques ou l'icône reçue sur son dispositif d'affichage et éventuellement abandonner la commande de la séquence lumineuse.

Si le premier téléphone portable 110 n'est pas dans la zone de couverture 132 des moyens de communication 131 du récipient ou si l'absence du récipiendaire dans la salle où le récipient est situé peut être présumée, la transmission 2100 peut être mise dans une liste de tâches du premier téléphone mobile pour être implémentée automatiquement lorsque le premier téléphone mobile se trouvera dans la zone de couverture des moyens de communication du récipient.

En variante, le message envoyé par le deuxième téléphone mobile 120 peut comprendre une photographie prise à l'aide d'un appareil photographique 123 du deuxième téléphone mobile. Le message comprend alors également des données de commandes d'une séquence lumineuse déterminées, via la table de correspondance, comme correspondant à un message comprenant une photographie. Le message est envoyé 2000 au premier téléphone mobile qui éventuellement affiche la photographie sur son dispositif d'affichage et qui transmet 2100 les données de commandes au récipient. Conséquemment, le récipient génère 2200 la séquence lumineuse commandée.

Si le récipient 1 est manipulé dans un certain laps de temps après que la commande ait été reçue ou après que la séquence lumineuse ait été générée, cette manipulation est détectée 2300 par le capteur 17 et un accusé de réception peut être envoyé 2400 au premier téléphone mobile 110. Le premier téléphone mobile 110 transmet 2600 l'accusé de réception au deuxième téléphone mobile 120.

En variante, à réception de l'accusé de réception, l'application installée sur le premier téléphone mobile peut proposer à l'utilisateur de sélectionner un message de réponse parmi une pluralité de messages que l'utilisateur a précédemment définie ou que propose l'application. Le premier téléphone mobile 110 envoie le message de réponse sélectionné au deuxième téléphone mobile 120 en guise d'accusé de réception. En alternative à cette variante, le message de réponse peut être déterminé en fonction du type d'événement éventuellement détecté, peut être déterminé de façon aléatoire parmi une pluralité de messages que l'utilisateur a précédemment définie ou que propose l'application, ou peut être déterminé en fonction du message envoyé par le deuxième téléphone mobile.

Par un autre exemple, l'application installée sur le premier téléphone mobile peut proposer à son utilisateur de prendre une photographie à l'aide de l'appareil photographique 113 équipant le premier téléphone mobile 110, de sorte d'envoyer ladite photographie au deuxième téléphone mobile 120 en guise d'accusé de réception. Cet envoi de ladite photographie est alors indépendant de toute connexion entre le premier téléphone et le récipient, si bien que la photographie n'est pas nécessairement prise dans la salle où se situe le récipient, mais peut être prise de partout, par exemple sur le chemin du travail.

Le message de réponse peut s'afficher, à réception, sur un dispositif d'affichage du deuxième téléphone mobile.

Selon une autre application, la séquence lumineuse peut être fonction d'une distance entre les deux téléphones mobiles. Le deuxième téléphone mobile au moins est alors équipé de moyens de géolocalisation 128. Le récipient 1 peut être conservé dans une localité constante, par exemple renseignée dans la banque de données personnelles. Le récipient 1 peut également être transporté par exemple par l'utilisateur du premier téléphone mobile 110. Dans ce cas, le premier téléphone mobile comprend également des moyens de géolocalisation 118 de sorte que la distance entre les deux téléphones mobiles puisse être calculée. Par exemple, la séquence lumineuse évolue d'une illumination bleue pâle et/ou animée d'une pulsation lente lorsque la distance entre les téléphones mobiles est grande à une illumination rouge vif et/ou animée d'une pulsation rapide lorsque la distance entre les deux téléphones mobiles est minimale. De la sorte, l'utilisateur du premier téléphone mobile sait, en observant le récipient, que l'utilisateur du deuxième téléphone mobile approche, et peut éventuellement préparer son arrivée en se parfumant du parfum contenu dans le récipient.

Le récipient de l'invention est intégré dans le système de communication de sorte de s'adapter au moins à la présence du premier téléphone mobile dans sa zone de couverture. Le récipient peut en outre être intégré dans le système de communication de sorte de réagir au moins à des événements détectés. Le récipient de l'invention est donc avantageusement un acteur du système de communication. Le récipient promeut l'environnement intelligent défini par le système de communication selon l'invention.

Le système de communication selon l'invention permet une remontée d'informations directe sur l'utilisation du récipient, et donc sur la consommation de son contenu, à l'entreprise qui commercialise le récipient. Jusqu'alors, cette remontée d'informations n'était possible que par le biais des distributeurs du circuit de distribution et était donc par essence partielle. L'entreprise qui commercialise le récipient selon l'invention possède ainsi une connaissance de sa clientèle qui lui permet de suivre le succès des produits déjà commercialisés et d'adapter ses futurs produits.

Différents modes de réalisation ont été décrits de façon détaillée ci-dessus. Toutefois, l'invention n'est pas limitée aux différents modes décrits. Par exemple, le récipient peut être équipé de moyens de reproduction sonore venant en complément ou en remplacement des sources de lumière pour générer une mélodie en complément ou en remplacement d'une séquence lumineuse. Par un autre exemple, chaque manipulation détectée du récipient et/ou chaque ouverture d'une des applications proposées, peut déclencher l'émission vers le deuxième téléphone mobile 120, via le premier téléphone mobile 110, d'un message d'activation potentielle d'une session de communication entre les téléphones mobiles, cette session pouvant être activée pendant un temps relativement court, de l'ordre de quelques dizaines de secondes, par exemple de 20 secondes, pour permettre à l'utilisateur du deuxième téléphone mobile d'envoyer un message au premier téléphone mobile, message qui sera ainsi transmis au récipient alors que l'utilisateur du premier téléphone mobile se situe vraisemblablement à proximité du récipient, et éventuellement alors que le récipient est en mode d'écoute. Par un autre exemple, une détection du premier téléphone mobile par le récipient, ou inversement du récipient par le premier téléphone mobile, peut déclencher l'émission automatique d'un message du premier téléphone mobile au deuxième téléphone mobile, lorsqu'une certaine durée, par exemple plusieurs heures, s'est écoulée depuis une détection précédente ; de la sorte, un utilisateur du deuxième téléphone mobile peut être averti de ce que l'utilisateur du premier téléphone mobile vient de rentrer du travail et est en situation réceptive pour recevoir un message privé, par exemple émis par le deuxième téléphone mobile. Par ailleurs, le système de communication décrit ci-dessus comprend deux téléphones mobiles, mais peut comprendre davantage de téléphones mobiles appartenant aux mêmes utilisateurs ou à des utilisateurs différents.

L'homme du métier appréciera que certaines des caractéristiques techniques décrites ci-dessus contribuent ou peuvent contribuer, éventuellement au prix d'une adaptation au contenu et au contenant considéré, à une gestion optimisée du budget énergétique du récipient. Par exemple, le récipient peut passer un temps variable allant de quelques semaines à plusieurs mois dans le circuit de distribution emprunté par le récipient pour rejoindre l'utilisateur. Ce temps peut donc être significatif au regard du temps d'utilisation du récipient une fois celui-ci mis en service. D'où l'importance de limiter la consommation électrique lors du séjour du produit dans la chaîne de distribution. Ce temps d'utilisation est lui-même d'une grande variabilité. À titre d'illustration :
- le temps d'utilisation typique d'un produit cosmétique peut aller de 3 à 6 mois environ, voire plus pour des produits de soin 'saisonniers' (produits solaire utilisés seulement l'été, produits fortement hydratants utilisés surtout l'hiver...),
- le temps d'utilisation d'une bouteille de champagne est *a contrario* très court, de l'ordre de l'heure,
- pour une bouteille de spiritueux comme un Cognac, le temps d'utilisation peut être de plusieurs années.

Ainsi, toute économie des ressources en énergie du récipient est utile afin de limiter la taille des sources d'énergie à embarquer qui ont par essence une durée de vie donnée ou *vice versa,* étant donné que, contrairement au terminal mobile qui peut être périodiquement rechargé, il n'est pas prévu de changer ou recharger les sources d'énergie du récipient dans certains de ces modes de réalisation.

Il est à noter que les moyens d'appairage 114, 124, les moyens de détection 116, 126 et les moyens de connexion 117, 127 de chaque téléphone mobile 110, 120 peuvent être compris dans les moyens de communication 111, 121 par ondes radio à courte distance du téléphone mobile. De même, toute référence faite ci-dessus à des moyens d'appairage, de détection ou de connexion du récipient peut s'entendre comme une référence aux moyens de communication 131 par ondes radio à courte distance du récipient 1. En outre, le microprocesseur 16 peut être intégré dans un module de communication par ondes radio à courte distance, par exemple un module de type Bluetooth, par exemple connu sous la référence « CC2541 Bluetooth Smart Soc », éventuellement conjointement avec les moyens d'appairage, de détection ou de connexion du récipient 1.

La présente invention vise aussi un programme d'ordinateur comportant des instructions pour la mise en oeuvre du procédé ci-avant, lorsque lesdites instructions sont réparties sur divers supports de mémorisation du système de communication ci-avant et exécutées par divers processeurs dudit système de communication. Elle vise aussi des supports (non transitoires notamment) stockant un tel programme. Le programme d'ordinateur peut être écrit dans différents langages de programmation. En outre, le programme d'ordinateur peut être basé sur des applications et/ou des interfaces de programmation destinées à en faciliter le développement.

## Revendications

1. Système de communication comprenant :
- un récipient (1) pour un produit cosmétique ou pharmaceutique ou un vin ou un spiritueux, et
- au moins deux équipements mobiles de télécommunication (110, 120),
dans lequel le récipient comprend une pluralité de composants électroniques fonctionnellement reliés entre eux dont :
- au moins une source de sollicitation sensorielle (7) agencée pour émettre un signal sensoriel vers l'extérieur du récipient,
- des moyens de communication (131) bidirectionnelle à courte distance par ondes radio, et
- des moyens de contrôle (16) de ladite au moins une source de sollicitation sensorielle, et
dans lequel un premier (110) desdits au moins deux équipements mobiles de télécommunication comprend des moyens de communication (111) bidirectionnelle à courte distance par ondes radio,
de sorte que le récipient et un deuxième (120) desdits au moins deux équipements mobiles de télécommunication soient aptes à communiquer entre eux par l'intermédiaire du premier équipement mobile de télécommunication, lorsque le premier équipement mobile de télécommunication est situé dans une zone de couverture (132) des moyens de communication bidirectionnelle du récipient,
les moyens de contrôle du récipient contrôlant ladite au moins une source de sollicitation sensorielle pour générer une séquence de signaux sensoriels déterminée au moins en fonction de données communiquées au récipient par le deuxième (120) desdits au moins deux équipements mobiles de télécommunication,
le système comprenant en outre des moyens de géolocalisation (128) du deuxième équipement mobile de télécommunication, de sorte que la séquence de sollicitation sensorielle soit, le cas échéant, générée au moins en fonction de données de géolocalisation correspondantes.

2. Système de communication selon la revendication 1, dans lequel, le récipient (1) étant associé à un identifiant et l'un au moins desdits au moins deux équipements mobiles de télécommunication comprenant des moyens de lecture (113, 123) de cet identifiant, le récipient et ledit équipement mobile de télécommunication comprennent des moyens d'appairage (134, 114, 124) et des supports de mémorisation (135, 115, 125) de données, ces moyens étant agencés de sorte que la lecture de l'identifiant du récipient par les moyens de lecture dudit équipement mobile de télécommunication déclenche un appairage entre le récipient et ledit équipement mobile de télécommunication par leurs moyens d'appairage respectifs.

3. Système de communication selon l'une quelconque des revendications précédentes, dans lequel le premier équipement mobile de télécommunication (110) comprend :
- des moyens de détection (116) de la présence du récipient dans la zone de couverture de ses moyens de communication (111) à courte distance et
- des moyens de connexion (117) automatique avec le récipient en utilisant au moins des données d'appairage prédéterminées stockées sur un support de mémorisation (115) du premier équipement mobile de télécommunication,
de sorte que, le cas échéant, une session de communication soit ouverte entre le premier équipement mobile de télécommunication et le récipient via leurs moyens respectifs de communication à courte distance (111, 131).

4. Système de communication selon l'une quelconque des revendications précédentes, comprenant en outre un serveur distant (140) avec lequel l'un au moins desdits équipements mobiles de télécommunication (110, 120) est apte à communiquer au moins pour télécharger une application à installer, cette application étant dédiée à permettre la définition et le stockage au moins sur un support de mémorisation (115, 125) de l'équipement mobile de télécommunication et/ou du serveur distant d'au moins l'une parmi :
- une banque de données personnelles et
- une table de correspondance entre données communiquées au récipient et séquence lumineuse à générer.

5. Système de communication selon l'une quelconque des revendications précédentes, dans lequel le récipient (1) comprend en outre au moins un capteur (17) agencé pour détecter un événement, le capteur étant fonctionnellement relié aux autres composants électroniques du récipient, de sorte que la détection de l'événement par le capteur déclenche, le cas échéant, l'émission de données correspondantes par les moyens de communication (131) du récipient vers le deuxième équipement mobile de télécommunication (120) ou un serveur distant.

6. Système de communication selon l'une quelconque des revendications précédentes, dans lequel le récipient comprend en outre une minuterie (133) fonctionnellement reliée aux autres composants électroniques du récipient pour assurer l'activation ou l'extinction de ladite au moins une source de sollicitation sensorielle (7) au moins en fonction de données prédéterminées stockées sur un support de mémorisation (134) du récipient ou du premier équipement mobile de télécommunication.

7. **Procédé** de communication mettant en oeuvre au moins :
- un récipient (1) pour un produit cosmétique ou pharmaceutique ou un vin ou un spiritueux, et
- au moins deux équipements mobiles de télécommunication (110, 120),
dans lequel le récipient comprend une pluralité de composants électroniques fonctionnellement reliés entre eux dont :
- au moins une source de sollicitation sensorielle (7) agencée pour émettre un signal sensoriel vers l'extérieur du récipient,
- des moyens de communication (131) bidirectionnelle à courte distance par ondes radio, et
- des moyens de contrôle (16) de ladite au moins une source de sollicitation sensorielle,
dans lequel un premier (110) desdits au moins deux équipements mobiles de télécommunication comprend des moyens de communication (111) bidirectionnelle à courte distance par ondes radio,
le procédé comprenant :
- la communication (2000, 2100) de données entre le récipient et un deuxième (120) desdits au moins deux équipements mobiles de télécommunication par l'intermédiaire du premier équipement mobile de télécommunication (110), lorsque le premier équipement mobile de télécommunication est situé dans une zone de couverture (132) des moyens de communication du récipient, et/ou
- la génération d'une séquence de signaux sensoriels déterminée au moins en fonction de données communiquées au récipient par le deuxième (120) desdits au moins deux équipements mobiles de télécommunication, les moyens de contrôle du récipient contrôlant ladite au moins une source de sollicitation sensorielle pour générer ladite séquence de signaux sensoriels, le procédé comprenant en outre la détermination de la géolocalisation d'au moins un desdits au moins deux équipements mobiles de télécommunication (110, 120) par des moyens de géolocalisation (126) de cet équipement mobile de télécommunication, de sorte que la séquence de signaux sensoriels soit, le cas échéant, générée en fonction de données de géolocalisation correspondantes.

8. Procédé de communication selon la revendication 7, comprenant :
- la lecture (1100) d'un identifiant associé au récipient (1) par l'un au moins desdits au moins deux équipements mobiles de télécommunication (110, 120) comprenant des moyens de lecture (113, 123) de cet identifiant, et
- l'appairage (1200) du récipient et dudit équipement mobile de télécommunication par des moyens d'appairage (134, 114, 124) respectifs du récipient et dudit équipement mobile de télécommunication.

9. Procédé de communication selon l'une des revendications 7 et 8, comprenant :
- la détection, par des moyens de détection (116) du premier équipement mobile de télécommunication, de la présence du récipient dans la zone de couverture de ses moyens de communication à courte distance,
- la connexion automatique du premier équipement mobile de télécommunication (110) avec le récipient (1) en utilisant au moins des données d'appairage prédéterminées stockées au moins sur un support de mémorisation (115) du premier équipement mobile de télécommunication, et
- le cas échéant, l'ouverture d'une session de communication entre le premier équipement mobile de télécommunication et le récipient via leurs moyens respectifs de communication à courte distance (111, 131).

10. Procédé de communication selon l'une des revendications 7 à 9, comprenant le téléchargement (1600) d'une application sur l'un au moins desdits équipements mobiles de télécommunication (110, 120) depuis un serveur distant (140) avec lequel l'équipement mobile de télécommunication est apte à communiquer, cette application à installer (1700) étant dédiée à permettre la définition et le stockage au moins sur un support de mémorisation (115, 125) de l'équipement mobile de télécommunication et/ou du serveur distant d'au moins l'une parmi :
- une banque de données personnelles et
- une table de correspondance entre données communiquées au récipient et séquence de signaux sensoriels à générer.

11. Procédé de communication selon l'une quelconque des revendications 7 à 10, comprenant :
- la détection d'un événement par au moins un capteur (17) compris dans le récipient et agencé à cet effet, le capteur étant relié fonctionnellement aux autres composants électroniques du récipient pour déclencher, le cas échéant,
- l'émission, par les moyens de communication (131) du récipient, de données correspondant à l'événement détecté, vers le deuxième équipement mobile de télécommunication (120) et/ou un serveur distant (140).

12. Procédé de communication selon l'une quelconque des revendications 7 à 11, comprenant l'activation ou l'extinction de ladite au moins une source de sollicitation sensorielle (7) par une minuterie (133) du récipient, au moins en fonction de données prédéterminées stockées sur un support de mémorisation (134) du récipient ou du premier équipement mobile de télécommunication, la minuterie étant fonctionnellement reliée aux autres composants électroniques du récipient.

13. Programme d'ordinateur comportant des instructions pour la mise en œuvre du procédé selon l'une quelconque des revendications 7 à 12, lorsque lesdites instructions sont réparties sur divers supports de mémorisation du système de communication selon l'une quelconque des revendications 1 à 6 et exécutées par divers processeurs dudit système de communication.

## Patentansprüche

1. Kommunikationssystem, umfassend:
- einen Behälter (1) für ein kosmetisches oder pharmazeutisches Produkt oder einen Wein oder eine Spirituose, und
- wenigstens zwei mobile Telekommunikationsgeräte (110, 120),
wobei der Behälter eine Mehrzahl von funktionell miteinander verbundenen elektronischen Komponenten umfasst, einschließlich:
- wenigstens eine Quelle der sensorischen Beaufschlagung (7), die dazu angeordnet ist, ein sensorisches Signal nach außerhalb des Behälters zu übertragen,
- Mittel zur bidirektionalen Kommunikation (131) über kurzer Entfernungen durch Funkwellen, und
- Mittel zur Steuerung (16) der wenigstens einen Quelle der sensorischen Beaufschlagung, und
wobei ein erstes (110) der wenigstens zwei mobilen Telekommunikationsgeräte Mittel zur bidirektionalen Kommunikation (111) über kurze Entfernungen durch Funkwellen umfasst,
so dass der Behälter und ein zweites (120) der wenigstens zwei mobilen Telekommunikationsgeräte über das erste mobile Telekommunikationsgerät miteinander kommunizieren können, wenn sich das erste mobile Telekommunikationsgerät in einem Abdeckungsbereich (132) der bidirektionalen Kommunikationsmittel des Behälters befindet,
wobei die Steuermittel des Behälters die wenigstens eine Quelle der sensorischen Beaufschlagung steuern, um eine Sequenz von sensorischen Signalen zu erzeugen, die wenigstens gemäß Daten bestimmt wird, die dem Behälter durch das zweite (120) der wenigstens zwei mobilen Telekommunikationsgeräte übermittelt werden, wobei das System ferner Mittel (128) zur Geolokalisierung des zweiten mobilen Telekommunikationsgerätes umfasst, so dass die Sequenz der sensorischen Beaufschlagung, falls erforderlich, zumindest als Funktion der entsprechenden Geolokalisierungsdaten erzeugt wird.

2. Kommunikationssystem nach Anspruch 1, wobei der Behälter (1) mit einer Kennung verbunden ist und wenigstens eines der wenigstens zwei mobilen Telekommunikationsgeräte Mittel zum Lesen (113, 123) dieser Kennung umfasst, wobei der Behälter und das mobile Telekommunikationsgerät Kopplungsmittel (134, 114, 124) umfassen und Datenspeichermedien (135, 115, 125), wobei diese Mittel derart angeordnet sind, dass das Lesen der Kennung des Behälters durch die Lesemittel des mobilen Telekommunikationsgerätes eine Kopplung zwischen dem Behälter und dem mobilen Telekommunikationsgerät durch ihre jeweiligen Kopplungsmittel auslöst.

3. Kommunikationssystem nach einem der vorhergehenden Ansprüche, wobei das erste mobile Telekommunikationsgerät (110) umfasst:
- Mittel zur Erfassung (116) der Anwesenheit des Behälters innerhalb des Abdeckungsbereichs seiner Mittel zur Kommunikation (111) über kurze Entfernungen, und
- Mittel zum automatischen Verbinden (117) mit dem Behälter unter Verwendung von wenigstens den vorgegebenen Kopplungsdaten, die auf einem Speichermedium (115) des ersten mobilen Telekommunikationsgerätes gespeichert sind,
so dass gegebenenfalls eine Kommunikationsverbindung zwischen dem ersten mobilen Telekommunikationsgerät und dem Behälter über ihre jeweiligen Mittel zur Kommunikation (111, 131) über kurze Entfernung eröffnet wird.

4. Kommunikationssystem nach einem der vorhergehenden Ansprüche, welches ferner einen entfernten Server (140) umfasst, mit dem wenigstens eines der genannten mobilen Telekommunikationsgeräte (110, 120) kommunizieren kann, um wenigstens eine zu installierende Anwendung herunterzuladen, wobei diese Anwendung dazu bestimmt ist, die Definition und Speicherung wenigstens auf einem Speichermedium (115, 125) des mobilen Telekommunikationsgerätes und/oder des entfernten Servers von wenigstens einem aus
- einer Datenbank persönlicher Daten, und
- einer Zuordnungstabelle zwischen den dem Behälter übermittelten Daten und der zu erzeugenden Lichtsequenz,
zu ermöglichen.

5. Kommunikationssystem nach einem der vorhergehenden Ansprüche, wobei der Behälter (1) ferner wenigstens einen Sensor (17) aufweist, der dazu angeordnet ist, ein Ereignis zu erfassen, wobei der Sensor funktionell mit den anderen elektronischen Komponenten des Behälters verbunden ist, so dass die Erfassung des Ereignisses durch den Sensor gegebenenfalls die Ausgabe entsprechender Daten durch die Kommunikationsmittel (131) des Behälters zu dem zweiten mobilen Telekommunikationsgerät (120) oder einem entfernten Server auslöst.

6. Kommunikationssystem nach einem der vorhergehenden Ansprüche, wobei der Behälter ferner einen Zeitgeber (133) aufweist, der mit den anderen elektronischen Komponenten des Behälters betriebsmäßig verbunden ist, um die Aktivierung oder Löschung der wenigstens einen Quelle der sensorischen Beaufschlagung (7) wenigstens gemäß vorgegebenen Daten sicherzustellen, die auf einem Speichermedium (134) des Behälters oder des ersten mobilen Telekommunikationsgerätes gespeichert sind.

7. **Kommunikationsverfahren,** welches wenigstens realisiert:
- einen Behälter (1) für ein kosmetisches oder pharmazeutisches Produkt oder einen Wein oder eine Spirituose, und
- wenigstens zwei mobile Telekommunikationsgeräte (110, 120),
wobei der Behälter eine Mehrzahl von funktionell miteinander verbundenen elektronischen Komponenten umfasst, einschließlich:
- wenigstens eine Quelle der sensorischen Beaufschlagung (7), die dazu angeordnet ist, ein Sensorsignal nach außerhalb des Behälters zu übertragen,
- Mittel zur bidirektionalen Kommunikation (131) über kurze Entfernungen durch Funkwellen, und
- Mittel zur Steuerung (16) der wenigstens einen Quelle der sensorischen Beaufschlagung,
wobei ein erstes (110) der wenigstens zwei mobilen Telekommunikationsgeräte Mittel zur bidirektionalen Kommunikation (111) über kurze Entfernungen durch Funkwellen umfasst,
wobei das Verfahren Folgendes umfasst:
- die Kommunikation (2000, 2100) von Daten zwischen dem Behälter und einem zweiten (120) der wenigstens zwei mobilen Telekommunikationsgeräte mittels des ersten mobile Telekommunikationsgerätes (110), wenn sich das erste mobile Telekommunikationsgerät in einem Abdeckungsbereich (132) der Kommunikationsmittel des Behälters befindet, und/oder
- die Erzeugung einer Sequenz von sensorischen Signalen, die wenigstens gemäß den Daten bestimmt wird, die von dem zweiten (120) der wenigstens zwei mobilen Telekommunikationsgeräte an den Behälter übermittelt werden, wobei die Steuermittel des Behälters die wenigstens eine Quelle der sensorischen Beaufschlagung steuern, um die Sequenz von sensorischen Signalen zu erzeugen, wobei das Verfahren ferner die Bestimmung der Geolokalisierung wenigstens eines der wenigstens zwei mobilen Telekommunikationsgeräte (110, 120) durch Geolokalisierungsmittel (126) dieses mobilen Telekommunikationsgerätes umfasst, so dass die Sequenz der sensorischen Signale gegebenenfalls gemäß entsprechenden Geolokalisierungsdaten erzeugt wird.

8. Kommunikationsverfahren nach Anspruch 7, umfassend:
- Lesen (1100) einer dem Behälter (1) zugeordneten Kennung durch wenigstens eines der wenigstens zwei mobilen Telekommunikationsgeräte (110, 120), umfassend Mittel zum Lesen (113, 123) dieser Kennung, und
- Koppeln (1200) des Behälters und des mobilen Telekommunikationsgerätes durch jeweilige Kopplungsmittel (134, 114, 124) des Behälters und des mobilen Telekommunikationsgerätes.

9. Kommunikationsverfahren nach einem der Ansprüche 7 und 8, umfassend:
- Erfassen durch Erfassungsmittel (116) des ersten mobilen Telekommunikationsgerätes, der Anwesenheit des Behälters im Abdeckungsbereich seiner Mittel zur Kommunikation über kurze Entfernungen,
- automatisches Verbinden des ersten mobilen Telekommunikationsgerätes (110) mit dem Behälter (1) unter Verwendung von wenigstens vorgegebenen Kopplungsdaten, die wenigstens auf einem Speichermedium (115) des ersten mobilen Telekommunikationsgerätes gespeichert sind, und
- gegebenenfalls Eröffnen einer Kommunikationsverbindung zwischen dem ersten mobilen Telekommunikationsgerät und dem Behälter mittels ihrer jeweiligen Mittel zur Kommunikation (111, 131) über kurze Entfernungen.

10. Kommunikationsverfahren nach einem der Ansprüche 7 bis 9,
umfassend das Herunterladen (1600) einer Anwendung auf wenigstens eines der genannten mobilen Telekommunikationsgeräte (110, 120) von einem entfernten Server (140), mit dem das mobile Telekommunikationsgerät kommunizieren kann, wobei diese zu installierende Anwendung (1700) dazu bestimmt ist, die Definition und Speicherung auf wenigstens einem Speichermedium (115, 125) des mobilen Telekommunikationsgerätes und/oder des entfernten Servers von wenigstens einem aus folgendem zu ermöglichen:
- eine Datenbank persönlicher Daten, und
- eine Zuordnungstabelle zwischen den an den Behälter übermittelten Daten und einer Folge von zu erzeugenden sensorischen Signalen.

11. Kommunikationsverfahren nach einem der Ansprüche 7 bis 10, umfassend:
- die Erfassung eines Ereignisses durch wenigstens einen Sensor (17), der in dem Behälter enthalten und zu diesem Zweck angeordnet ist, wobei der Sensor funktionell mit den anderen elektronischen Komponenten des Behälters verbunden ist, um gegebenenfalls auszulösen,
- die Übertragung von Daten, die dem erfassten Ereignis entsprechen, durch die Kommunikationsmittel (131) des Behälters an das zweite mobile Telekommunikationsgerät (120) und/oder einen entfernten Server (140).

12. Kommunikationsverfahren nach einem der Ansprüche 7 bis 11, umfassend die Aktivierung oder Löschung der wenigstens einen Quelle der sensorischen Beaufschlagung (7) durch einen Zeitgeber (133) des Behälters, wenigstens gemäß vorgegebenen Daten, die auf einem Speichermedium (134) des Behälters oder des ersten mobilen Telekommunikationsgerätes gespeichert sind, wobei der Zeitgeber funktionell mit den anderen elektronischen Komponenten des Behälters verbunden ist.

13. Computerprogramm, umfassend Befehle zur Durchführung des Verfahrens nach einem der Ansprüche 7 bis 12, wenn diese Befehle auf verschiedene Speichermedien des Kommunikationssystems nach einem der Ansprüche 1 bis 6 verteilt und von verschiedenen Prozessoren des Kommunikationssystems ausgeführt werden.

## Claims

1. Communication system comprising:
- a container (1) for a cosmetic or pharmaceutical product or a wine or spirit, and
- at least two mobile telecommunication devices (110, 120),
wherein the container comprises a plurality of electronic components that are operatively interconnected, including:
- at least one source of sensory stimulation (7), arranged to emit a sensory signal towards the exterior of the container,
- two-way short-range radio communication means (131),
- control means (16) for said at least one source of sensory stimulation, and
and wherein a first (110) among said at least two mobile telecommunication devices comprises two-way short-range radio communication means (111),
such that the container and a second (120) among said at least two mobile telecommunication devices are able to communicate with each other via the first mobile telecommunication device, when the first mobile telecommunication device is located in a coverage area (132) of the two-way communication means of the container,
the control means of the container controlling said at least one source of sensory stimulation so as to generate a sensory signal sequence determined at least on the basis of data communicated to the container by the second (120) among said at least two mobile telecommunication devices
the system further comprising means (128) for the geolocation of one of said mobile telecommunication devices, so that the sensory stimulation sequence is generated, when appropriate, at least on the basis of corresponding geolocation data..

2. Communication system according to claim 1, wherein, as the container (1) is associated with an identifier, and at least one among said at least two mobile telecommunication devices comprises means (113, 123) for reading this identifier, the container and said mobile telecommunication device comprise pairing means (134, 114, 124) and data storage media (135, 115, 125), these means being arranged so that the reading of the container identifier by the reading means of said mobile telecommunication device initiates a pairing between the container and said mobile telecommunication device by their respective pairing means.

3. Communication system according to any one of the preceding claims, wherein the first mobile telecommunication device (110) comprises:
- means (116) for detecting the presence of the container within the coverage area of its short-range communication means (111), and
- means (117) for automatic connection with the container by using at least predefined pairing data stored in a storage medium (115) of the first mobile telecommunication device,
such that, where appropriate, a communication session is opened between the first mobile telecommunication device and the container, via their respective short-range communication means (111, 131).

4. Communication system according to any one of the preceding claims, further comprising a remote server (140) with which at least one among said mobile telecommunication devices (110, 120) is able to communicate at least in order to download an application to install, this application being dedicated to defining and storing, at least on a storage medium (115, 125) of the mobile telecommunication device and/or of the remote server, at least one among:
- a personal database, and
- a lookup table mapping between the data communicated to the container and the light sequence to generate.

5. Communication system according to any one of the preceding claims, wherein the container (1) further comprises at least one sensor (17) arranged to detect an event, the sensor being operatively connected to the other electronic components of the container so that detection of the event by the sensor then triggers, where appropriate, the sending of corresponding data by the communication means (131) of the container to the second mobile telecommunication device (120) or a remote server.

6. Communication system according to any one of the preceding claims, wherein the container further comprises a timer (133) operatively connected to the other electronic components of the container in order to ensure the activation or deactivation of said at least one source of sensory stimulation (7) at least on the basis of predefined data stored in a storage medium (134) of the container or of the first mobile telecommunication device.

7. Communication method making use of at least:
- a container (1) for a cosmetic or pharmaceutical product or a wine or a spirit, and
- at least two mobile telecommunication devices (110, 120),
wherein the container comprises a plurality of electronic components that are operatively interconnected, including:
- at least one source of sensory stimulation (7) arranged to emit a sensory signal towards the exterior of the container,
- two-way short-range radio communication means (131), and
- control means (16) for said at least one source of sensory stimulation,
wherein a first (110) among said at least two mobile telecommunication devices comprises two-way short-range radio communication means (111),
the method comprising:
- the communication (2000, 2100) of data between the container and a second (120) among said at least two mobile telecommunication devices via the first mobile telecommunication device (110), when the first mobile telecommunication device is located within a coverage area (132) of the communication means of the container, and/or
- the generation of a sequence of sensory signals that is determined at least on the basis of data communicated to the container by the second (120) among said at least two mobile telecommunication devices, the control means of the container controlling said at least one source of sensory stimulation so as to generate said sequence of sensory signals,
the method further comprising the determination of the geolocation of at least one of said at least two mobile telecommunication devices (110, 120) by geolocation means (126) of this mobile telecommunication device, so that the sequence of sensory signals is generated, when appropriate, on the basis of corresponding geolocation data.

8. Communication method according claim 7, comprising:
- the reading (1100) of an identifier associated with the container (1), by the at least one among said at least two mobile telecommunication devices (110, 120) comprising means (113, 123) for reading this identifier, and
- the pairing (1200) of the container and said mobile telecommunication device, by respective pairing means (134, 114, 124) of the container and said mobile telecommunication device.

9. Communication method according to one of claims 7 and 8, comprising:
- the detection, by detection means (116) of the first mobile telecommunication device, of the presence of the container within the coverage area of its short-range communication means,
- the automatic connection of the first mobile telecommunication device (110) with the container (1) by using at least the predefined pairing data stored at least in a storage medium (115) of the first mobile telecommunication device, and
- where appropriate, the opening of a communication session between the first mobile telecommunication device and the container, via their respective short-range communication means (111, 131).

10. Communication method according to one of claims 7 to 9, comprising the downloading (1600) of an application onto at least one of said mobile telecommunication devices (110, 120) from a remote server (140) with which the mobile telecommunication device is able to communicate, this application to be installed (1700) being dedicated to defining and storing, at least in a storage medium (115, 125) of the mobile telecommunication device and/or of the remote server, at least one among:
- a personal database, and
- a lookup table mapping between the data communicated to the container and the sequence of sensory signals to generate.

11. Communication method according to any one of claims 7 to 10, comprising:
- the detection of an event by at least one sensor (17) comprised in the container and arranged for this purpose, the sensor being operatively connected to the other electronic components of the container in order to trigger, when appropriate,
- the sending, by the communication means (131) of the container, of data corresponding to the detected event, to the second mobile telecommunication device (120) and/or a remote server (140).

12. Communication method according to any one of claims 7 to 11, comprising the activation or deactivation of said at least one source of sensory stimulation (7) by a timer (133) of the container, at least on the basis of predefined data stored in a storage medium (134) of the container or of the first mobile telecommunication device, the timer being operatively connected to the other electronic components of the container.

13. Computer program comprising instructions for implementing the method according to any one of claims 7 to 12, when said instructions are distributed across various storage media of the communication system according to any one of claims 1 to 6 and executed by various processors of said communication system.
